# EUROPEAN PATENT APPLICATION

(11) **EP 1 494 134 A1**
(43) Date of publication of application: **05.01.2005**
(21) Application number: 03291587.8
(22) Date of filing: 27.06.2003
(51) Int. Cl.: G06F 17/30, G06F 3/033

(54) **A method, a computer software product, and a telecommunication device for accessing or presenting a document**

(71) Applicant: ALCATEL, 75008 Paris (FR)
(72) Inventor: Hoche, Michael, Dr., D-71701 Schwieberdingen (DE)
(74) Representative: Brose, Gerhard, Dipl.-Ing.

(57) **Abstract**

The invention relates to a method for accessing or presenting a document or an application with a characteristic identifier for efficient communication comprising the steps of presenting the characteristic identifier and accessing and spawning the document or an application interface, based on said characteristic identifier where the document or the application interface is analyzed, deriving a topic description of the document or the application interface and the topic description is presented additionally or in place of said characteristic identifier. Furthermore the invention relates to a telecommunication device and a computer software product.

## Description

The present invention relates to a method for accessing or presenting a document with a characteristic identifier for efficient communication. Furthermore, the present invention relates to a computer software product and a telecommunication device.

Today's communication especially via telecommunication networks using mediums like e-mail, voice mail, hyper text overextending human beings with an overflow of information. A tool for separating and identifying (in time) useful and relevant information seems to be necessary.

There are a bunch of natural language processing (NLP) techniques available. The majority is computationally complex for large documents. The current research trend is to refine (semantically) understanding, e.g. by a semantically driven web search engine. Currently, semantical access is about restricted to string pattern matching structured documents applied in a lot of mail filters, search engines, information management systems, catalogs, and databases. The underlying techniques are textual pattern matching, parsing, and computer linguistics methods. Information is classified and summarized in a catalog, attribute, or directory or the like. This fact is illustrated in that current information processing tools like Lotus Notes, Netscape, etc. provide fixed headlines or titles like an e-mail subject, e.g. "Important Information", often not allowing to conclude about the content and even drifting (semantically) from the content.

A multimedia summary generation employing user feedback is for example known from the United States Patent No. 6,557,042.

Intelligent (user) interfaces are human-machine interfaces that aim to improve the efficiency, effectiveness, and naturalness of machine interaction by representing, reasoning, and acting on models of the user, domain, task, discourse, and media (e.g., graphics, natural language, gesture). Intelligent user interfaces are multifaceted, in purpose and nature, and include capabilities for multimedia input analysis, multimedia presentation generation, and the use of user, discourse and task models to personalize and enhance interaction.

Agents or assistants have increased in prominence in applications, including as search agents, desktop support (e.g., Microsoft's Office Assistant), collaborative filtering (e.g., shopping recommenders), and for intelligent distributed computing. Agents may assist by decreasing task complexity, bringing expertise to the user (in the form of expert critiquing, task completion, coordination) or simply providing a more natural environment with which to interact.

Within this patent application the term document stands for a collection of presentable objects like text areas, menus, images, video panes, windows, and even a screen as whole. This means that a document is treated from a user point of view, for instance the presentation of several icons and a menu on a desktop realizing an operating system user interface like Windows. A user can select something and another document is shown, e.g. a screen with a started application, treated in the same way as a hyper text document viewed by a browser.

A characteristic identifier is treated as a description for topics for identifying resources. Such a description might be any syntactical expression like a header, a head line, a classification or any symbol like an icon or sign. In general it is a (short) descriptor for a content.

Considering for instance HyperText Markup Language (HTML) offering many of the conventional publishing idioms for rich text and structured documents. What separates it from most other markup languages is its features for hypertext and interactive documents, i.e. the link (or hyperlink, or Web link), the basic hypertext construct. A link is a connection from one Web resource to another. Although a simple concept, the link has been one of the primary forces driving the success of the Web.

A link has two ends -- called anchors -- and a direction. The link starts at the "source" anchor, i.e. a characteristic identifier, and points to the "destination" anchor, i.e. a document, which may be any Web resource, e.g., an image, a video clip, a sound bite, a program, an HTML document, an element within an HTML document, or in general a document. A link has usually a title to add information about the nature of a link and might be further decorated by additional information like alternative text, actions changing document presentation in case of certain events, etc.

The process of following a link or in general exploring a characteristic identifier is called spawning.

Usually this presentation and the decorating information as well as the ends of the link are determined at the document creation time or retrieved from a data base or the like using e.g. ColdFusion technology, Active Server Pages, Java Server Pages, native code, etc.

When changing document content it is required to change also link decoration, i.e. keeping integrity, in order to solve the problem of effectively accessing or presenting consistent information.

This problem is solved by a method for accessing or presenting a document or an application with a characteristic identifier for efficient communication comprising the steps of presenting the characteristic identifier and accessing and spawning the document or an application interface, based on said characteristic identifier, comprising the further steps of analyzing the document or the application interface, deriving a topic description of the document or the application interface, and presenting the topic description additionally or in place of said characteristic identifier.

The problem is further solved by a computer software product comprising programming means for presenting a characteristic identifier and accessing and spawning a document or an application, based on said characteristic identifier, wherein the computer software product comprising programming means for analyzing the document or an application interface, deriving a topic description of the document or the application interface and presenting the topic description additionally or in place of said characteristic identifier.

And the problem is solved by a telecommunication device or system comprising accessing means for accessing a document or an application and presenting means for presenting a document with a characteristic identifier, wherein the telecommunication device or system further comprises analyzing means for analyzing the document or the application interface and deriving a topic description of the document or the application interface, as well as comprising presenting means for presenting the topic description additionally or in place of said characteristic identifier.

In other words: The invention is about visualization of relevant information for efficient communication by a topic pointing device and by synthesizing headlines and abstracts from referred documents.

The motivating idea of the invention is to support information access or processing, i.e. navigation through information or presentation of information in the way that a user (or generally a client) expects. This expectation is based on the hidden content. The problem solved by this invention is shared between all intelligent and interactive man-machine-interfaces or machine-machine-interfaces where documents are accessible or presentable as well as where an application interface needs to be presented.

Accordingly, it is an object and advantage of the present invention to provide a content based dynamically structured information model in which objects, i.e. documents or document parts, are connected to each other by arbitrary, user-specified relations where the connection is maintained automatically based on content.

Another advantage of the present invention is to allow a flexible, consistent, and generic information model with an increase integrity, that will present opportunities for improving information retrieval. The present invention will reduce maintenance effort.

A further advantage of the present invention is the user friendliness due to the synthesized (reliable and integer) topic descriptions, resumes, or abstracts based on the "real" content.

Yet another advantage of the present invention is that it is easy to implement and to deploy due to the uniformity/universality of the approach, e.g. as a framework.

Other advantages are that the invention enables to enrich nearly all user and machine interfaces, e.g. web site, web portals, search engines, editors, messengers, collaboration environments, distributed systems, etc. by synthesized indications. Even audio/video communication sequences, or advertising sequences could be enriched, e.g. by providing subtitles based on the original document. An in-time content based language or media translation might be conceivable.

These and many other objects and advantages of the present invention will become apparent to those of ordinary skill in the art from a consideration of the drawings and ensuing description, where
**Figure. 1 to 5** are schematic drawings of content and application presentation in web browsers according to prior art.
**Figure. 6** is a schematic drawing illustrating the principle of hyper linked documents according to prior art.
**Figure. 7** is a schematic drawing illustrating a deployment process of a document according to prior art.
**Figure. 8** is a schematic drawing illustrating a deployment process of a document comprising the method according to the invention.
**Figure. 9** is a schematic drawing of an information compass showing the topic of the currently processed information in a user's mind map using the method according to the invention.
**Figure. 10** is a schematic drawing of a Windows file browser labeled by extensions provided by a computer software product according to the invention.

Those of ordinary skill in the art will realize that the following description of the present invention is illustrative only and is not intended to be in any way limiting. Especially the term document is understood as any media / information presentation, and the hyper text metaphor is used in a generic way for any kind of interface like a window manager or the like. Other embodiments of the invention will readily suggest themselves to such skilled persons from an examination of the within disclosure.

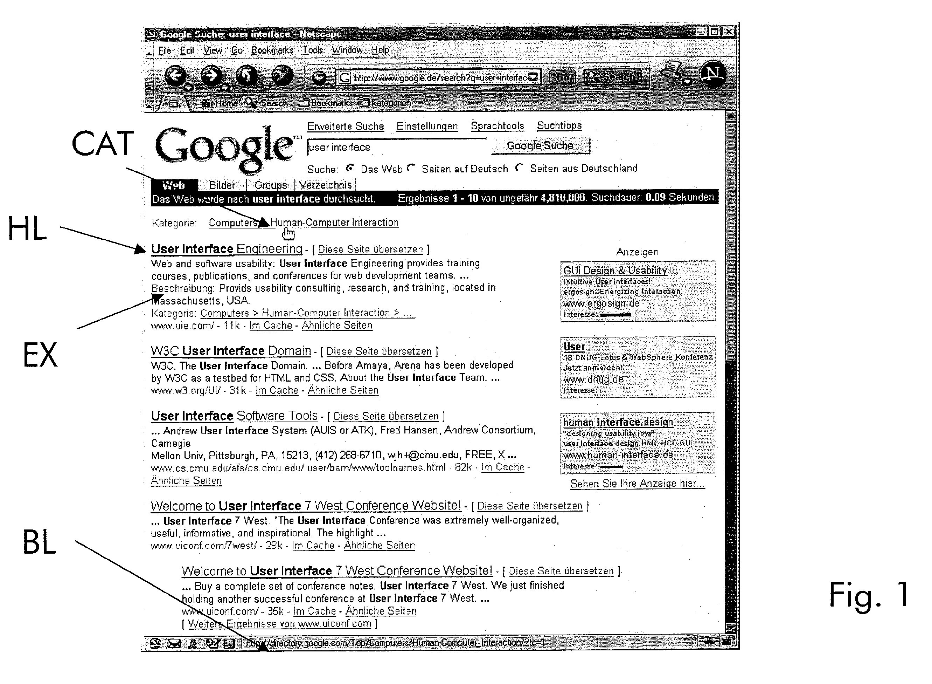

Figure 1 shows a screenshot of a browser presenting an HTML document. This document is decomposed into certain parts comprising among others a category term CAT, headlines HL, an excerpt EX and a base line BL.

The document is a search result from a search engine referring multiple hits for a query. A category CAT, i.e. a domain descriptor is given. Each hit is presented by a headline HL referring by a hyper link a matching document, where the headline HL is the title of the referred document, i.e. a characteristic identifier. Furthermore an excerpt EX is shown. That is a small text passage extracted from the referred document. When designating a hyper link the uniform resource identifier of the referred document is shown at the base line BL. Designating an item is usually done with a designation device like a mouse, a data glove or the like enabling a user moving a designation pointer.

Hence a user is enabled by a headline HL and an excerpt EX of a referred document to access the document.

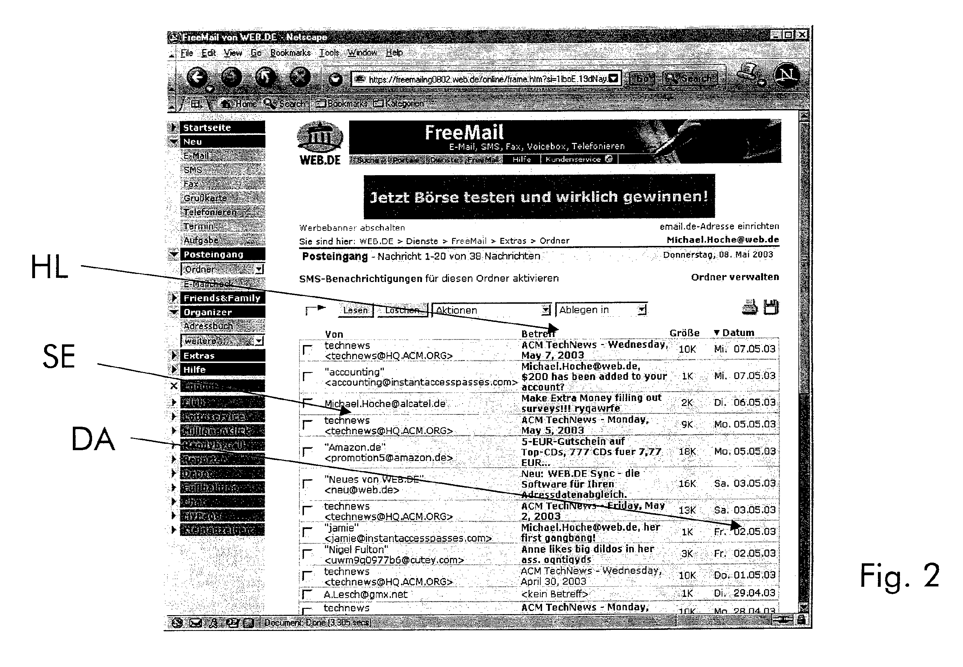

A similar screenshot of a browser is shown in Figure 2. This document is decomposed into certain parts, too, comprising among others a list of subject headline HL, i.e. the characteristic identifier, with senders SE and additional information like size or date DA.

The shown document is an e-mail application showing the list of received e-mails by sender SE, subject SU, and date DA, etc.

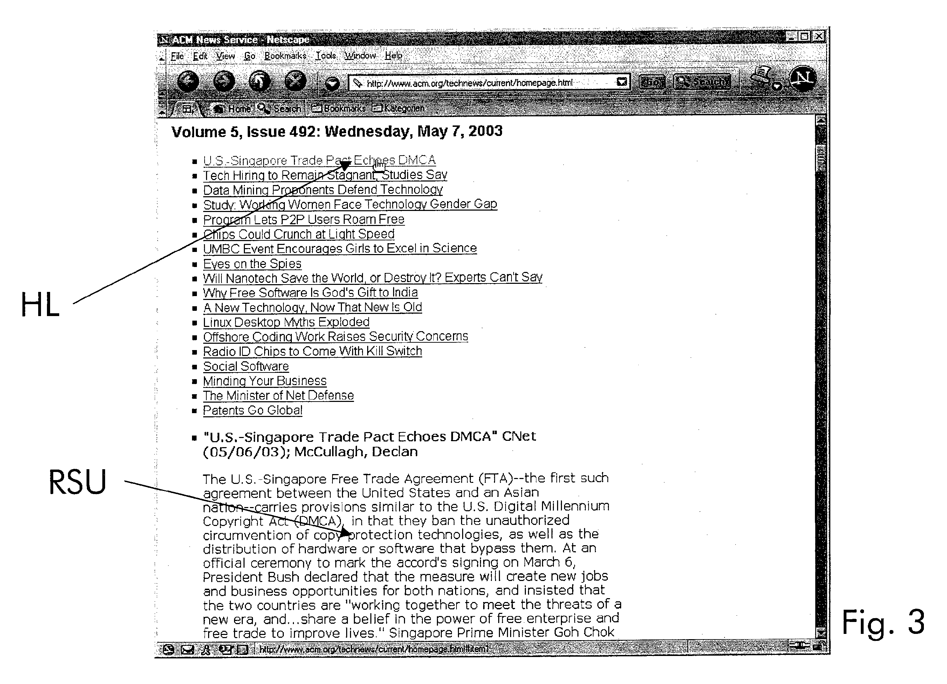

The following three figures, Figure 3 to Figure 5, show a screenshot of a browser presenting a collection of newspaper documents. The document comprises headlines HL, referred summaries RSU, referred summary headlines RHL, original headlines OHL, and original documents OD.

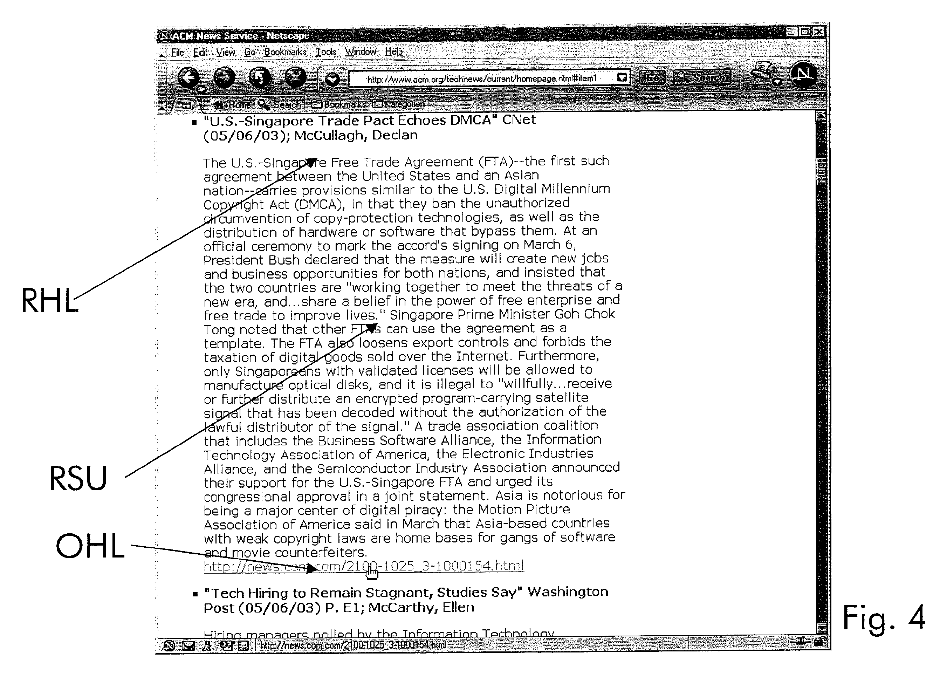

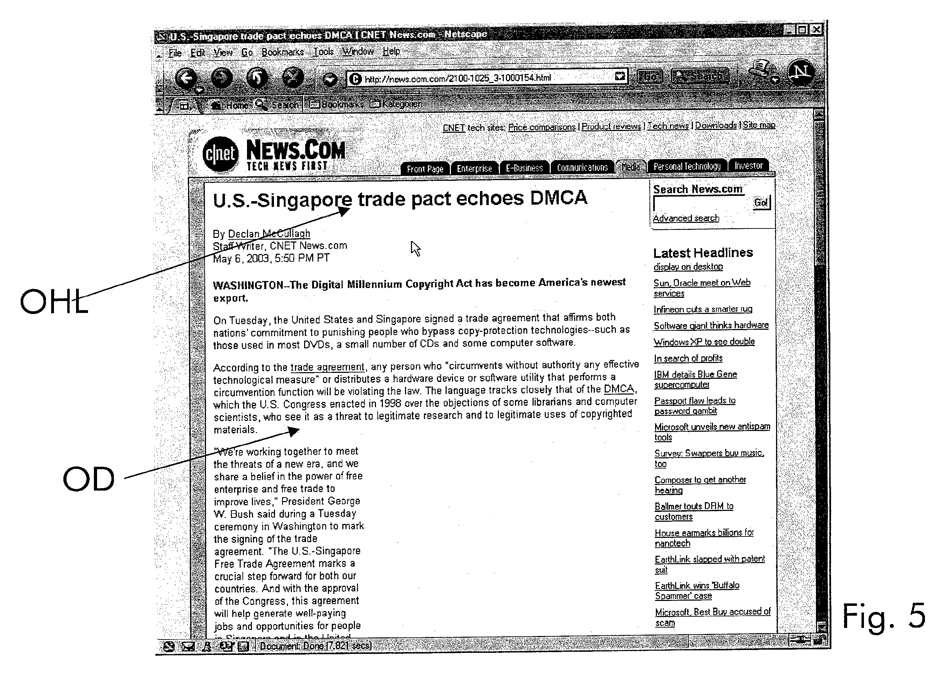

Figure 3 shows the entry document of the newspaper where a list of headlines HL, i.e. characteristic identifiers, hyper-linking corresponding referred summaries RSU, i.e. when a user follows the hyper link of a headline HL, the corresponding referred summary headline RHL, another characteristic identifier in a detail context, and the referred summary RSU will be presented, as shown in Figure 4. The latter presentation comprises also a presentation of the original head line OHL, i.e. another characterizing identifier with a hyper link referring to the original document OD, shown in Figure 5. The original document is the content source of the whole document and comprises also among other objects an original headline OHL. The Figures 3 to 5 illustrate a semantical (content) refinement drill-down supported by statically structured and statically inter-linked documents. The newspaper document illustrates that the characteristic identifier is a context sensitive concept, e.g. used for a refinement drill-down.

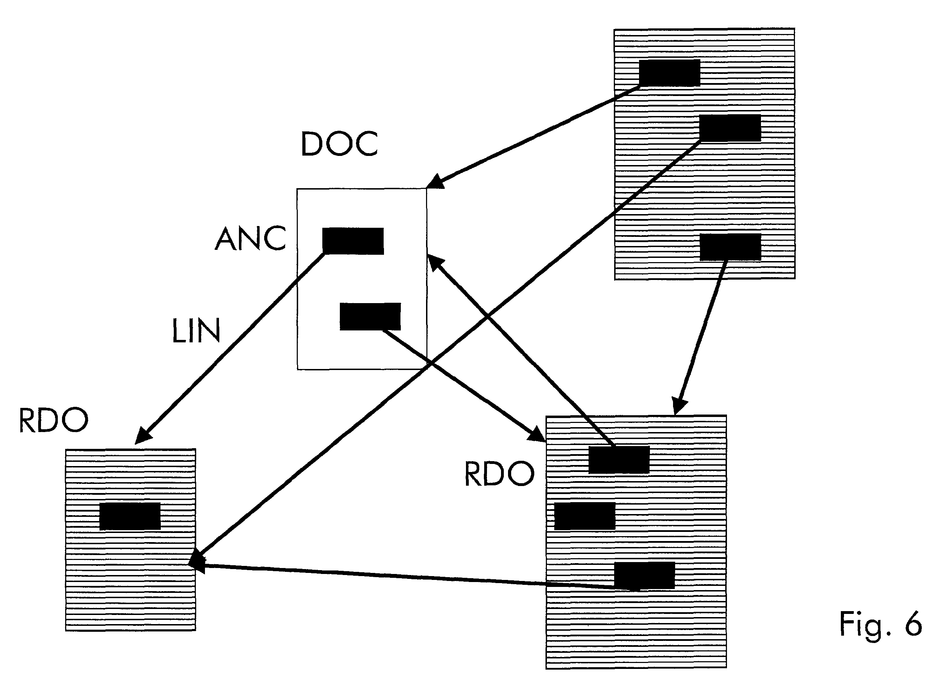

Figure 6 shows the principle of referred documents, like the hyper text documents in the above examples. The documents DOC comprise anchors referring to a referred document RDO via a link LIN. The anchors are presented by characteristic identifiers, e.g. pictures, buttons, or text. The links LIN and the anchors ANC allow to navigate or hop from document DOC to referred document RDO through the whole graph of linked documents.

Such a navigation property is shared by a large class of hyper media documents, e.g. sensitive pictures, areas or fields, as well as pull-down menus or generally any kind of (hierarchical) menus. Even a desktop showing several icons that are sensitive is understood as a graph of linked documents (presentations of screens). Realization, i.e. data collections, executables, builds, driving media presentations of (inter-) linked media are also called document within this application.

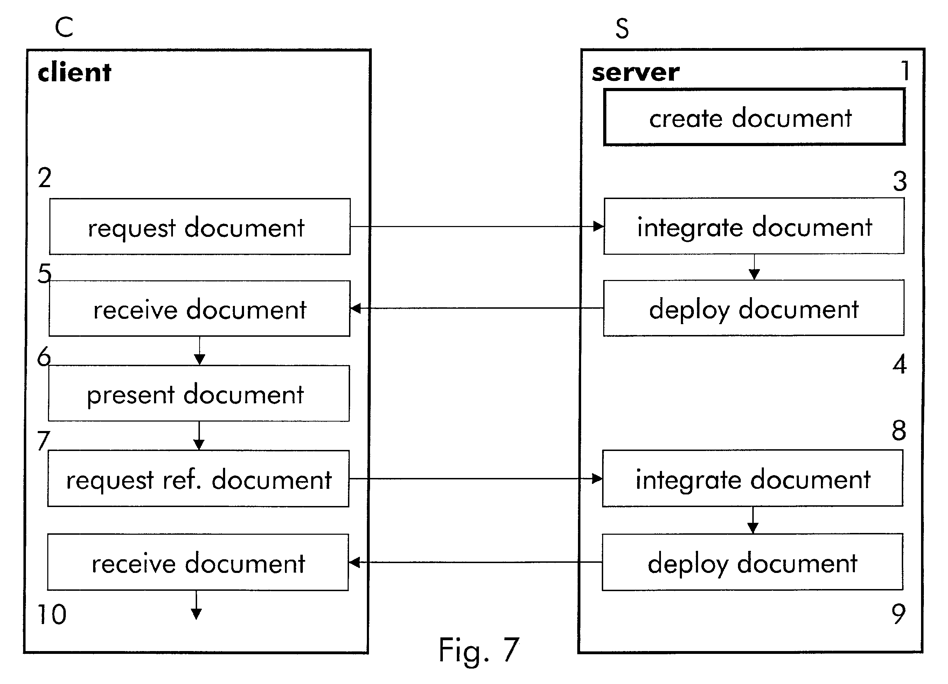

Figure. 7 shows a document creation and deployment life cycle. The activities are split into two categories, a client (category) C comprising consumer activities, and a server (category) S comprising the producer activities. A client C for the HTML examples above might be a browser where a user is enabled to navigate through hyper links. It could also be a telecommunication device or even a model of an end-user presentation within a model-view-control architecture, e.g. an X-client or a window manager. A server S might be a document design tool, which is in the above HTML example a web-design editor. For application environments this might be a development environment comprising programming, compiler, linking, and executing means. A concrete example for such a server is a SmallTalk environment with an object browser embedded in an operating system like UNIX.

A server S creates 1 a document. After that the document will be available for client requests. The client C can request 2 documents and the server S will react by integrating 3 the requested document. This integrated document will then be deployed 4 from the server S to the client C. The client C receives 5 the document and will present 6 the document. The document comprises hyper links and the client C enables to request 7 further referred documents via the hyper links. The server C then integrates 8 the next document, deploys 9 it, and the client C receives 10 it etc.

Figure 7 illustrates the prior art creation and life cycle of documents, independent of how the document is realized, e.g. as a view of a SmallTalk image, an executable application in an operating system environment, a web application using Java Server Pages or a plain HTML page. The client C might be any kind of document interface like a user-interface, a browser, an X-server, etc. The server might be any kind of document storing or producing application or component like a web server, an executable program, or an X-client application, etc.

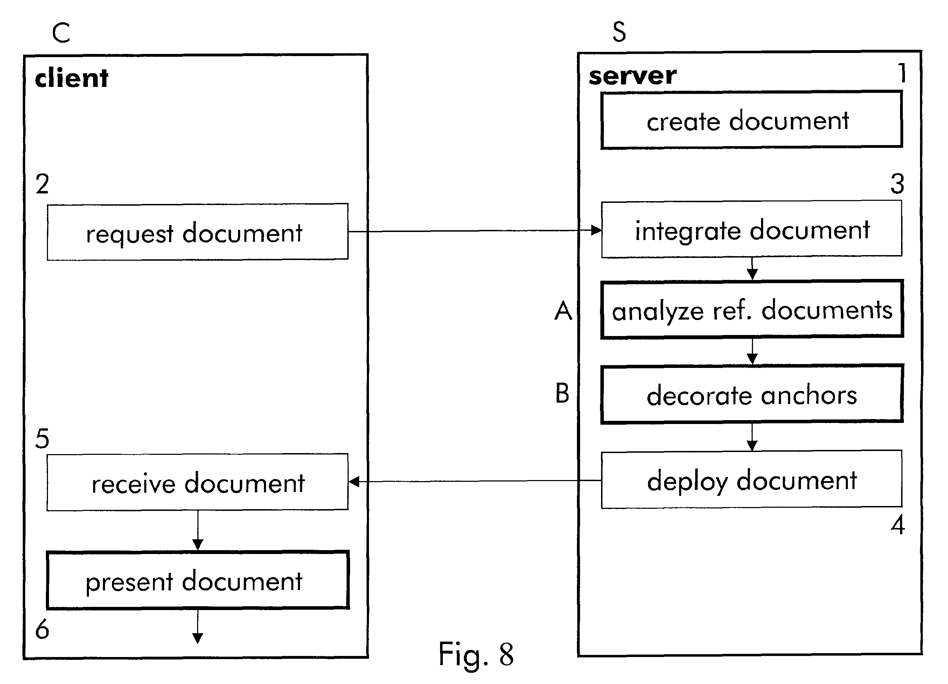

Figure 8 shows an extension of the creation and deployment life cycle according to the invention. When a document is integrated 3 at a server S the referred documents are recursively (with limited depth) analyzed A in order to enhance or complete the document. In the shown example the anchors are decorated B with the result of the analyze A, i.e. synthetic and integer characteristic identifiers. Then, when the document is completed, it is deployed 4 from the server S and received 5, as well as presented 6 to the client C.

The further technical effect caused by the extensions shown in Figure 8 are that the creation 1 of the document is simplified, because only a document shape needs to be created. The shape will be filled by the additional steps of analyzing A and decorating B. Another effect is that the integrity of the links is ensured by the analyze. That means for instance that the methods avoid creating or presenting a hyper link to a mail containing science information like "The proof of NP not = P." with a (semantically) misleading tag "FEE FOO GOO" when applying the method according to the invention.

For a web application the decoration information might be created by an application server performing the analyze and the decoration, where analyze means analysis of referred documents, and decoration means completing the integrated document by filling out the blank shape.

The analyze action might be implemented by a summarization using natural language processing. There are currently powerful, i.e., general but adaptable, methods developed, such as linguistic methods or image recognizers, not requiring extensive world knowledge, and methods able to deal with large-scale text structure as well as individual sentences or structures.

A summary (text, picture, etc.) is a derivative of a source text condensed by selection and/or generalization on important content. This is not an operational definition, but it emphasizes the crux of summarizing, reducing whole sources without requiring pre-specification of desired content, and allows content to cover both information and its expression. This broad definition subsumes a very wide range of specific variations. These stem from the context factors characterizing individual summarizing applications. Summarizing is conditioned by input factors categorizing source form and subject; by purpose factors referring to audience and function; and also, subject to input and purpose constraints, by output factors including summary format and style.

The global process model has two major phases: interpretation of the source text involving both local sentence analysis and integration of sentence analyses into an overall source meaning representation; and generation of the summary by formation of the summary representation using the source one and subsequent synthesis of the summary text. This logical model emphasizes the role of text representations and the central transformation stage. It thus focuses on what source representations should be like for summarizing, and on what condensation on important content requires. Previous approaches to summarizing can be categorized and assessed, and new ones designed, according to the nature of their source representation, including its distance from the source text, its relative emphasis on linguistic, communicative or domain information and therefore the structural model it employs and the way this marks important content; and the nature of its processing steps, including whether all the model stages are present and how independent they are.

Applicable technologies cover a bunch of artificial intelligence technologies e.g. neuronal networks for optical character recognition and visual media extraction and context sensitive parsers, and could be found in any artificial intelligence text book, e.g. in the table of contents of the book Artificial Intelligence by Patrick Henry Winston.

Simple to implement are for instance statistical methods for automatically extracting information about associations between words. Survey documents from large collections of text have the potential defining topics.

A further systematic methodology is selecting general ontological categories as follows:
- Select from the classical philosophical repertoire a set of formal relations (neutral with respect to the domain choice) which shall play a foundational role in the ontology
- Select and adapt from the literature the ground axioms for these relations, such as those concerning their algebraic properties
- Add non-ground axioms, which establish constraints across basic relations
- Define formal properties induced by the formal relations and analyze systematically the allowed combinations of formal properties, introducing a set of basic categories
- Classify the relevant kinds of domain entities according to the basic categories. The result will help to understand the minimal domain structure.
- Study the dependencies/interrelationships among basic categories, introducing inter-categorical relations
- Increase the depth level of ontological analysis, by iterating this methodology within each basic category.

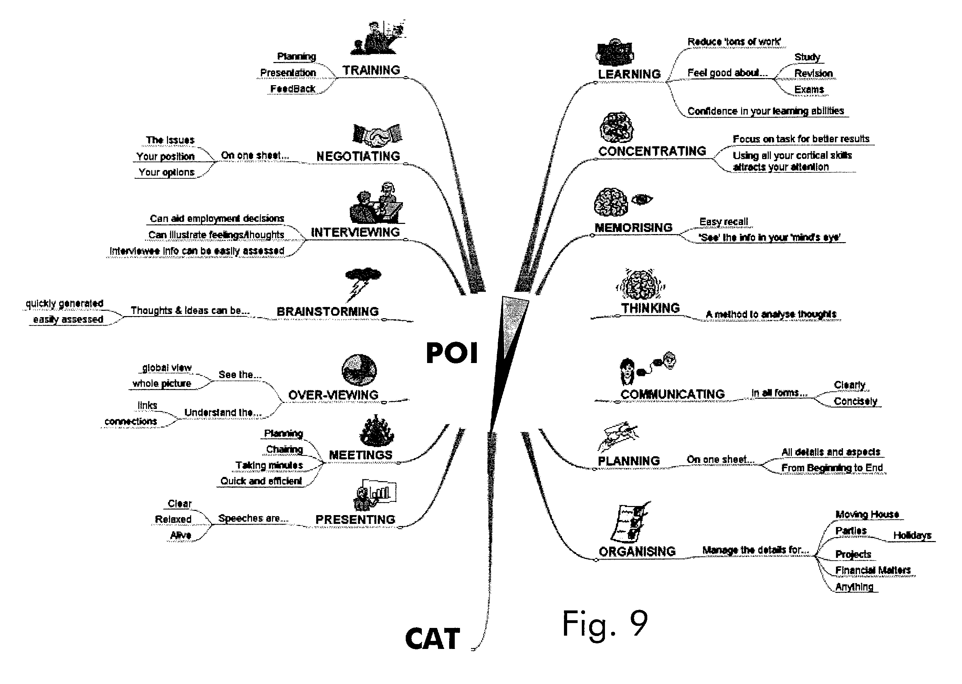

**Figure. 9** shows an information compass pointing with a pointer POI to a category CAT, presented as a user's mind map.

The picture illustrates two things. First an example of an application interface visualizing the content category based on imagination of knowledge with a pointer POI. Such information could also be visualized by a status bar or by highlighting the corresponding category. The user interface is like the X-eye application showing in the direction of a mouse pointer. The designation device for the shown application interface could also be a mouse and the reactive behavior of the application could be when designating a documents like a window, an e-mail or the like, the pointer shows the category of the content. Such an interface is preferably like the X-eye application, integrated in the visual environment.

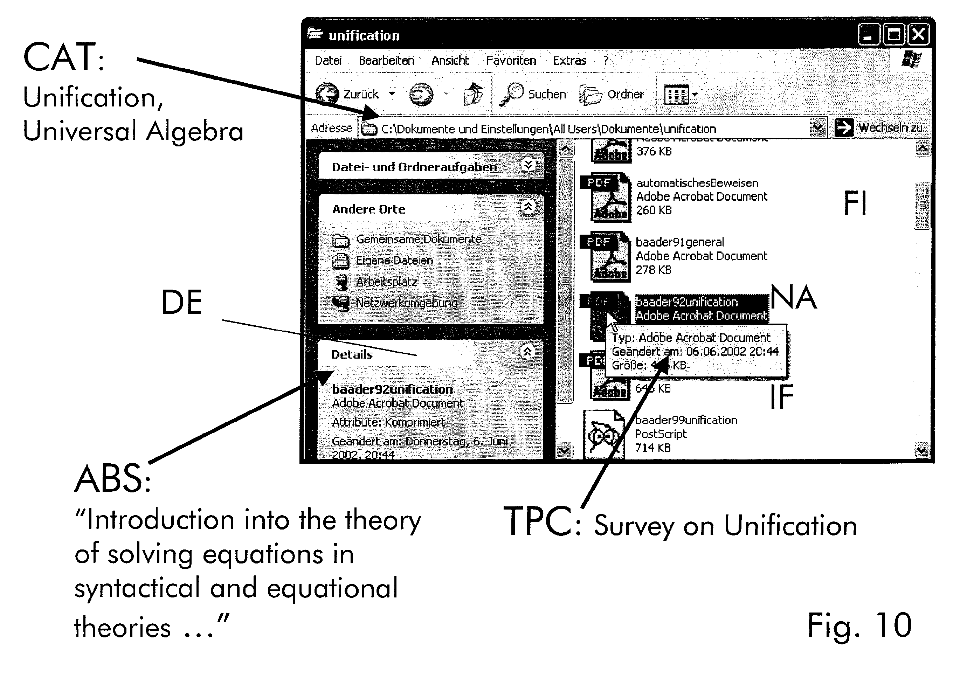

Figure. 10 shows a Windows XP file browser comprising a file with the name NA in a file area FI, detailed information in the details area DE, a mouse pointer designating a file and a raised file information field IF.

The provided information is rather structural than informative. Applying the method according to the invention, the following improvement could be reached. The labels could be extended by a computer software product according to the invention (at the file creation time or dynamically at the browsing time).

The details area DE could be enriched by an abstract ABS of the designated document stating "Introduction into the theory of solving equations in syntactical and equational theories ..." The derived category CAT "Unification, Universal Algebra" could enrich the access path, i.e. the name of the directory the file browser shows. In the shown case the name of the directory matches the category accidentally. The file information field IF could be enriched by a synthetizised topic description TPC, namely "Survey on Unification". In the shown case tighter information is presented, because from the file name "baader99unification" it could not be concluded that the information content is a survey on unification.

The introductionary browser page examples shown in Figures 1 to 5 could be enhanced accordingly. A web application server, e.g. Apache in combination with Tomcat, creating dynamically the web page could add a synthetizised content-based headline to the headline HL, The excerpt might be replaced by a synthetizised content-based abstract. And the category, which is suggested by the referred document browser at the time the owner indicates the document to the search engine could be derived automatically instead of manually. The mail application page shown in Figure 2 could (using the same technology) be enriched for instance by adding a synthetizised topic description to the subject HL. This enrichment could avoid annoying e-mails with non-informative misleading subjects like "URGENT". The newspaper document shown in Figures 3 and 4 could even be created completely automatically instead of editing the pages manually. The referred document shown in Figure 5 contains the necessary information therefore. Hence a intelligent web application knowing the referred document resources is enabled creating the inter-linked newspaper document by synthesizing headlines HL and referred summaries RSU.

Although illustrations of presently preferred embodiments and applications of this invention are shown and described herein, many variations and modifications are possible which remain within the concept, scope, and spirit of the invention, and these variations would become clear to those of skill in the art after perusal of this application.

For example, the invention contributes to the evolution of internet from a network where the resources are managed using resource identifiers to a semantic Web. The Semantic Web is the representation of data on the World Wide Web. The current collaborative effort is led by the World Wide Web Consortium with participation of a large number of researchers and industrial partners. It is based on the Resource Description Framework, which integrates a variety of applications using XML for syntax and URIs for naming. The Semantic Web is an extension of the current web in which information is given well-defined meaning, better enabling computers and people to work in cooperation.

A further application of the method according to the invention is that it enables a new dimension of uniform user interfaces allowing investigations. Searches for information generally involve a dialogue between a client (user, computer, service, etc.) and a server (information system, data base, search engine, computer, etc.). Usually a client starts somewhere and follows a sequence of navigation steps, e.g., surfing through a hyper text document until the desired information is found. A dynamic (user, client) interface can help this navigation process by suggesting useful steps to be taken next, such as presenting an abstract of a refereed document when pointing to a link. The invention allows to provide a framework for an assisted navigation system. Under this framework, an designer even needs not consider a shape of for instance a user interface but only needs to specify content. And the content itself is accessible and presented by the method according to the invention.

Such a user interface framework might comprise
- object summary: give an item, navigate to other items that share a particular attribute or predicate.
- collection summary: given a collection, expand to include other items that are similar to some of those in the collection.
- refine collection: given a collection, narrow down to the subset of items that share a common value on a given attribute.

The following scenario illustrates the application of the framework above. Let a user search a person in an information system based on the fuzzy knowledge of the affiliation computer scientist and the interest in artificial intelligence. Hence the user might define a person as being a computer scientist. The information system will answer with a collection of a bunch of persons dealing with computers and it might further provide, based on the personal descriptions, a synthesized set of discriminating criteria for refining the search, e.g. age, hobby, appearance attributes, etc. The user remembers that the sought person is about 30 years old and has blond hair. Fortunately this leads to a small result set.

The power of the content based navigation framework arises from the fact that each navigation mode is intelligent in its own way and that the information made available by the various modes can be put together. The navigation framework, when initialized, uses the properties of the current piece object to set up the various navigation modes. All navigation modes are expected to analyze the current object and produce a list of navigation suggestions for the framework to present. The information for instance includes hyper link titles, associated actions resulting from selecting the links, and possibly the number of items that would be found upon selecting each link. The navigation framework groups the possible navigation actions by the navigation modes and presents this information.

The applicability of the method according to the invention is not limited to (personal) computers. The client device might be e.g. a wearable or a mobile, enriched by an agent analyzing, presenting, or indicating currently relevant information. This relevance might be indicated by a focused window, by text emphasis, or a pointing device e.g. the compass in Figure 9.

The information source could be any media, e.g. speech, coming from a telephone call, a voice mail, an audio stream of a film, a text, a figure, an image, a moving image, etc. A designation by the client might be a focused window, a designated or selected passage, a browser content, etc.

The computer software product according to the invention might implement a (personalized) agent indicating the topic based on user preferences or trained from user behavior using neuronal network technology. In general, the user's current context have to be defined by behavior, preferences, or by a dictionary (default background/context). This agent processes the current (selected or raised) information, e.g. by analyzing the textual representation using computer linguistic processing techniques and visualizes the information context, e.g. in a separate window showing a compass pointing to a category.

Computationally the indicator might be realized by defining a set of characteristic words for a set of topics. Statistical and geometrical methods, e.g. realized by a (classifying) neuronal networks, are used for automatically extracting information about associations between words or documents from large collections of text.

The software might be extended by a natural language processing system deriving a headline and/or an abstract and indicating the relevance with respect to users' preferences or might be adaptive.

The client might configure the agent for personalization before indicating his/her favorite topics / themes establishing a mind map.

## Claims

1. A method for accessing or presenting a document or an application with a characteristic identifier for efficient communication comprising the steps of
- presenting the characteristic identifier and
- accessing and spawning the document or an application interface, based on said characteristic identifier,
**characterized in that** said method comprises the further steps of
- analyzing the document or the application interface, deriving a topic description of the document or the application interface and
- presenting the topic description additionally or in place of said characteristic identifier.

2. The method according to claim 1, **characterized in that** said method further comprises the steps of
- synthesizing an abstract of the document and
- presenting the abstract.

3. The method according to claim 1 or 2, **characterized in that** the method is triggered by a designation.

4. The method according to claim 1, **characterized in that** the analyzing is performed recursively to gather descriptions from referred documents or applications.

5. The method according to claim 1, **characterized in that** said analyzing is personalized and adaptive (user-dependent, learning subject area of interest).

6. The method according to claim 1, **characterized in that** a characteristic identifier is created linking further documents identified by said analysis.

7. A computer software product comprising programming means for presenting a characteristic identifier and accessing and spawning a document or an application, based on said characteristic identifier, **characterized in that** the computer software product comprises programming means for analyzing the document or an application interface, derives a topic description of the document or the application interface and presents the topic description additionally or in place of said characteristic identifier.

8. The computer software product according to claim 7, **characterized in that** it comprises a user interface for visualizing said derived topic description of the document.

9. The computer software product according to claim 7, **characterized in that** it further comprises programming means for synthesizing an abstract of the document or the application interface and presenting the abstract.

10. The computer software product according to claim 7, **characterized in that** presenting the topic description is triggered by a designation or a by a focus.

11. The computer software product according to claim 7, **characterized in that** the visualization comprises a user specific mind map and a pointer.

12. A telecommunication device comprising accessing means for accessing a document or an application and presenting means for presenting a document with a characteristic identifier, **characterized in that** the telecommunication device further comprises analyzing means for analyzing the document or the application interface and deriving a topic description of the document or the application interface, as well as comprising presenting means for presenting the topic description additionally or in place of said characteristic identifier.
